Europäisches Patentamt

European Patent Office

Office européen des brevets

(11) Numéro de publication: **0 384 800**

**A1**

# DEMANDE DE BREVET EUROPEEN

(21) Numéro de dépôt: 90400354.8

(22) Date de dépôt: 09.02.90

(51) Int. Cl.5 **C08K 3/22, C08K 5/42, C08L 61/06**

(30) Priorité: 10.02.89 FR 8901759

(43) Date de publication de la demande:
29.08.90 Bulletin 90/35

(84) Etats contractants désignés:
**AT BE CH DE DK ES GB GR IT LI LU NL SE**

(71) Demandeur: **NORSOLOR S.A.**
**Tour Aurore - Cédex 5 18, place des Reflets**
**F-92080 Paris la Défense 2(FR)**

(72) Inventeur: **Behar, Gilles**
**43, Rue de L'Abbayette**
**F-62223 Anzin Saint Aubin(FR)**
Inventeur: **Cousin, Michel**
**81, rue Wattiez**
**F-62218 Loison Sous Lens(FR)**
Inventeur: **Oginski, Jean-Claude**
**19, rue de Noeux**
**Verquigneul, F-62113 Labourse(FR)**

(74) Mandataire: **Rieux, Michel**
**NORSOLOR Service Propriété Industrielle**
**Tour Aurore 18, Place des Reflets Cedex no.**
**5**
**F-92080 Paris la Défense 2(FR)**

(54) **Nouvelles compositions de moulage thermodurcissables.**

(57) - Nouvelles compositions de moulage thermoducissables dans la masse.
- Nouvelles compositions constituées de résine phénoliques du type résols catalysées par un catalyseur du type acide.
- Applications à la fabrication de pièces automobiles.

**EP 0 384 800 A1**

EP 0 384 800 A1

## NOUVELLES COMPOSITIONS DE MOULAGE THERMODURCISSABLES

La présente invention concerne de nouvelles compositions de moulage thermodurcissables. elle a plus particulièrement pour objet des compositions de moulage thermodurcissables à base de résines phénoliques.

Les compositions de moulage thermodurcissables sont des matériaux que l'on prépare à partir de résines thermodurcissables renforcées par des fibres telles que fibres d'amiante, cellulosiques ou fibres de verres. en particulier,rovings de non-tissé, par exemple en polyester de haut poids moléculaire, en chlorure de polyamide aromatique. Comme variétés de matériaux plastiques renforcés par des fibres et utilisées dans le moulage plastique, on connaît en particulier les composés de moulage en feuilles (en anglais SMC sheet molding compound) et les composés de moulage dans la masse (en anglais bulk molding compound : BMC). Les composés de moulage dans la masse sont des mélanges constitués de résine thermodurcissable. de charge et de fils de verre coupés : ils se présentent en vrac ou en boudin prêts à l'emploi, et ont une consistance pâteuse. Ces composés de moulage peuvent être transformés sous l'effet de la chaleur et de la pression par exemple par moulage par compression. par extrusion ou par injection en pièces dures finies.

Les résines thermodurcissables connues jusqu'à présent pour la fabrication des compositions de moulage dans la masse sont le plus souvent constituées d'un polyester non saturé et d'un monomère qui peut être copolymérisé avec ce polyester. le monomère étant le plus souvent choisi parmi le styrène et le phtalate de diallyle. le polyester étant généralement le produit de condensation d'un glycol et d'un mélange d'un diacide à non saturation en alpha et béta et d'un diacide saturé. Les compositions de moulage dans la masse outre les réactifs cités ci-dessus contiennent un catalyseur. un inhibiteur et une certaine proportion de renforts : fibres de verre, amiante, cellulose (sisal en particulier) utilisées en mélange et de charges : kaolin, hydrate d'alumine...

Les compositions de moulage connues fabriquées jusqu'alors à partir de résines thermodurcissables constituées de résines polyesters présentent plusieurs inconvénients. En particulier les pièces fabriquées à partir de ces compositions présentent une tenue au feu médiocre, par ailleurs les propriétés mécaniques des pièces obtenues chutent de façon importante lorsqu'elles subissent des élévations de température importante. On conçoit donc que les pièces fabriquées à partir de résines polyesters seront difficilement utilisables dans des secteurs d'application où des chocs thermiques peuvent naître tel que dans le secteur automobile en particulier pour les utilisations sous capot près des sources de chaleur : tels que couvre-culasse ou encore tuyaux d'admission d'échange thermique. En dehors du médiocre comportement à la chaleur. les pièces fabriquées à partir de résines polyesters ont aussi l'inconvénient de présenter une chute importante des propriétés mécaniques lorsqu'elles sont soumises à un traitement dans un bain d'essence. Or c'est le type de traitement que les pièces plastiques subissent lorsqu'on les utilise,en particulier, dans le secteur automobile.

Le besoin se fait donc sentir de disposer de compositions de moulage dans la masse qui permettent de fabriquer des pièces présentant à la fois une bonne tenue au feu, une bonne tenue thermique et un bon comportement aux carburants pétroliers.

La présente invention concerne de nouvelles compositions de moulage thermodurcissables dans la masse (BMC) convenant pour la fabrication de pièces automobiles selon lesquels ces compositions sont constituées de résines thermodurcissables, de renforts et de charges caractérisées en ce que ces compositions sont constituées de résines phénoliques du type résols catalysées par un catalyseur de type acide.

On a en effet trouvé que la mise en oeuvre de résines phénoliques du type résol catalysées par un catalyseur de type acide permettait d'obtenir des compositions de moulage présentant à la fois un excellent comportement au feu et aux carburants pétroliers. On a aussi trouvé que la mise en oeuvre de telles résines conduisait à des compositions qui présentent et conservent une consistance molle pendant 2 mois environ à une température inférieure à 20° C, ce qui facilite un potentiel de mise en oeuvre lors du moulage par compression ou par injection.

Selon l'invention les nouvelles compositions de moulage sont constituées de résines phénoliques du type résols catalysées par un catalyseur de type acide. Les résols utilisés pour la fabrication des compositions conformes à l'invention sont des résols connus préparés par condensation de formol sur le phénol en présence d'un catalyseur alcalin. Ils présentent un rapport molaire F.P compris entre 1,2 et 2,5 et contiennent éventuellement des additifs tels que plastifiants et tensioactifs. Selon l'invention le durcissement des résines phénoliques est réalisé à l'aide d'un catalyseur de type acide. De préférence ces catalyseurs du type acide sont choisis parmi les catalyseurs latents. Par catalyseurs latents on entend les catalyseurs

2

qui sont pratiquement inactifs à basse température mais qui deviennent catalytiquement actifs à la température élevée nécessaire à la polycondensation de la résine. Comme catalyseurs qui conviennent pour la fabrication des compositions selon l'invention on peut citer par example les solutions constituées d'un ester alcoylé, d'un acide toluène sulfonique ou d'un mélange constitué d'un solvant organique et d'un acide toluène sulfonique ou d'acide sulfurique concentré : comme ester alcoylé on peut citer les esters méthylique et éthylique des acides para- toluène sulfoniques. Les quantités de durcisseurs utilisées sont celles employées classiquement pour le durcissement des résols : ces quantités sont comprises entre 1 à 20% en poids par rapport au poids de la solution de résol et de préférence entre 2 à 10% en poids.

Les nouvelles compositions objet de l'invention sont fabriquées en additionnant aux résines phénoliques des pigments, des charges et des renforts tels que fibres de verre. Comme charges on utilise de préférence des charges qui ne réagissent pas avec les catalyseurs acides mis en oeuvre dans l'invention : on peut par exemple citer l'hydrate d'aluminium, le silicate d'alumine, le kaolin ou le sulfure de zino. Ces charges sont mises en oeuvre en quantité pouvant atteindre 200% en poids par rapport au poids de la solution de résine phénolique. Pour la fabrication des compositions selon l'invention on utilise de façon connue des renforts constitués de fils coupés de fils de verre, de rovings de fils de verre coupés des fibres d'amiante, des fibres de sisal coupées ou des fibres de carbone ou d'aramide. La quantité de fibres utilisées est telle que la composition de résine finie contienne au plus 50% en poids par rapport au poids total de la composition finie.

Les compositions objet de l'invention sont fabriquées de façon connue par mélange des différents constituants. Comme appareils de mélange on utilise tous les mélangeurs connus de préférence les mélangeurs du type Werner. Les compositions obtenues peuvent ensuite être moulées par compression ou par injection pour la fabrication de pièces finies. Le moulage est réalisé de façon connue à des pressions comprises entre 40 et 140 bars, à une température comprise entre 100 et 180° C, pendant 20 à 80 secondes par millimètre d'épaisseur. Grâce à leurs bonnes propriétés mécaniques, leur bon comportement au feu, leur bonne résistance aux produits pétroliers, les pièces moulées à partir des compositions de l'invention conviennent particulièrement pour la fabrication des pièces automobiles.

Les exemples suivants illustrent la présente invention. Les quantités sont exprimées en partie en poids,

## Exemple 1

On introduit dans un mélangeur du type "WERNER" les ingrédients suivants : 100 parties en poids d'une résine phénolique qui présente les caractéristiques suivantes :
rapport molaire $\frac{F}{P}$ = 1,5
Extrait sec : 83% (déterminé sur 4 grammes de produit dans une étuve réglée à 140° C pendant 3 heures)
Viscosité à 25° C (Baumé): 11 Pa.s
- 200 parties d'hydrate d'aluminium
- 4 parties de catalyseur constitué de l'ester méthylique de l'acide paratoluène sulfonique
- 11 parties d'éthylène glycol
- 30% en poids parties de fibres de verre par rapport au poids des ingrédients.

La composition est malaxée pendant 30 minutes, à une température de 25° C. Elle est ensuite moulée par compression dans un moule comportant des plateaux chromés : la température du moule est de 150° C, la pression de 60 à 80 bars) le temps de moulage est de 3 minutes. La pièce moulée présente les caractéristiques suivantes :
- Résistance en flexion : 88 N/mm² (Norme NFT 57105)
- Module en flexion : 10100 N/mm² (Norme NFT 57105)

## Exemple 2

L'exemple 1 est répété mais en utilisant 71 parties d'hydrate d'aluminium, 25 % de fibres de verre et 5 parties d'un catalyseur à base d'un ester éthylique de l'acide paratoluène sulfonique. Après moulage par compression, on obtient une pièce qui présente les caractéristiques suivantes :-Résistance en flexion : 64 N/mm²
- Module en flexion : 6278 N/mm²

## Exemple 3

L'Exemple 1 est répété mais en mettant en oeuvre 25% de fibres de verre. Après moulage on obtient une pièce qui présente les caractéristiques suivantes:- Résistance en flexion : 85 N/mm²
- Module en flexion : 8500 N mm²

Exemple 4

L'Exemple 1 est répété mais en mettant en oeuvre 20% de fibres de verre. Après moulage par compression on obtient une pièce qui présente les caractéristiques suivantes :
- Résistance en flexion : 64 N mm²
- Module en flexion : 7300 N mm²

Exemple 5

A titre de comparaison on prépare une composition connue de moulage à partir de résines polyesters. On met en oeuvre les ingrédients suivants :
- Résines de base : 100 parties
- Caractéristiques : viscosité à 25° C = 20 poises
Teneur en styrène : 31.5
Coloration HAZEN < 150
Stabilité à 110° C> 8 Heures
Indice Acide Partiel : 20 (Norme NFT 51511)
Indice Acide Total : 20 (Norme NFT 51512)
Indice Hydroxyl : 32 (Norme NFT 51513)
- Fibres de verre : 30 parties
- Stéarate de calcium : 6 parties
- 200 parties de carbonate de calcium vendu sous la marque MILLICARB
- Peroxyde de perbenzoate de tertiobutyle : 1.7 parties
- Polystyrène : 20 parties
- Elastomère polystyrène - polybutadiene : 20 parties.
Le Tableau 1 suivant résume les caractéristiques des pièces obtenues dans les 3 exemples précédents et dans l'exemple 5. Le tableau 1 indique également les caractéristiques des pièces obtenues après une immersion totale de 2000 heures dans l'essence.

Exemple 6

L'Exemple 1 est répété avec les ingrédients suivants :
- Résine phénolique : 100 parties
- Hydrate d'aluminium : 180 parties
- Catalyseurs : 4.5 parties de l'ester méthylique de l'acide paratoluène sulfonique pur.
- Noir ("Mogul L") : 3 parties
- Fibres de verre : 25 parties
- Agent de démoulage : 0,5 partie
On a, à titre de comparaison, fabriqué une composition de moulage à base de résines polyesters. Les produits utilisés étaient les suivants :
Résine polyester : 70 parties de la résine utilisée dans l'exemple 5
Agent anti-retrait, thermoplastique : 30 parties
Peroxyde : 2 parties
Peroctoate de tertio-butyle
Inhibiteur(Quinone) : 0,02 parties
Agent de démoulage : 6 parties
Charge : 220 parties
Verre : 25 parties
Ces deux compositions ont été moulées par compression. Le Tableau 2 annexé donne l'évolution des propriétés mécaniques suivant la température. Le produit à base de résine phénolique est soumis à un recuit de 3 heures à 100° C et 2 heures à 150° C.

TABLEAU 1

| Exemples | Nature résine | Taux verre (x) | Propriétés initiales | | Propriétés après 2000 Heures | | | |
|---|---|---|---|---|---|---|---|---|
| | | | | | Eprouvet. humides | | Eprouvet.séchées (˙) | |
| | | | Flexion | Module | Flexion | Module | Flexion | Module |
| 1 | Phénolique | 30 | 88 | 10.100 | 71 | 8.200 | 74 | 8.300 |
| 3 | Phénolique | 25 | 85 | 8.500 | 62 | 6.560 | 69 | 6.900 |
| 4 | Phénolique | 20 | 64 | 7.300 | 71 | 6.550 | 72 | 6.550 |
| 5 | Polyester | 30 | 115 | 10.500 | 55 | 8.200 | 32 | 7.000 |

(˙) 2 H à 70° C.·

(x) % en poids par rapport à tous les ingrédients de la composition

TABLEAU 2

CONTRAINTE RUPTURE FLEXION

TABLEAU 3

MODULE RIGIDITE FLEXION

Revendications

EP 0 384 800 A1

1) Nouvelles compositions de moulage thermodurcissables dans la masse (BMC) convenant pour la fabrication de pièces automobiles selon lesquelles ces compositions sont constituées de résines thermodurcissables, de renforts et de charges caractérisés en ce que ces compositions sont constituées de résines phénoliques du type résols catalysées par un catalyseur de type acide, le catalyseur étant choisi parmi un ester alcoylé, un acide toluène sulfonique ou un mélange constitué d'un solvant organique et d'un acide toluène sulfonique ou d'acide sulfurique concentré.

7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 217 370 (OCCIDENTAL CHEMICAL CORP.) <br> * Colonne 4, lignes 10-15; pages 12-13; exemple 3 * <br> --- | 1 | C 08 K 3/22 <br> C 08 K 5/42 <br> C 08 L 61/06 |
| X | GB-A-2 092 053 (BBA GROUP) <br> * Page 2, lignes 23-41; page 1, lignes 15-21 * <br> --- | 1 | |
| A | FR-A-2 538 402 (SOCIETE CHIMIQUE DES CHARBONNAGES) <br> ----- | | |

**DOMAINES TECHNIQUES RECHERCHES (Int. Cl.5)**

C 08 K
C 08 L

Le présent rapport a été établi pour toutes les revendications

| Lieu de la recherche | Date d'achèvement de la recherche | Examinateur |
|---|---|---|
| LA HAYE | 13-06-1990 | STIENON P.M.E. |

EPO FORM 1503 03.82 (P0402)